(19) Europäisches Patentamt
European Patent Office
Office européen des brevets

(11) **EP 3 838 806 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **20195857.6**

(22) Anmeldetag: **11.09.2020**

(51) Internationale Patentklassifikation (IPC):
**B65G 1/137** (2006.01)    **B25J 9/00** (2006.01)
**B25J 9/16** (2006.01)    **B65G 47/90** (2006.01)

(52) Gemeinsame Patentklassifikation (CPC):
**B65G 1/1378; B25J 9/0093; B25J 9/1697; B65G 47/905**

(54) **VOLLAUTOMATISCHES ROBOTER-KOMMISSIONIERSYSTEM UND KOMMISSIONIERVERFAHREN MIT SENSORANORDNUNG ZUM VERMESSEN EINES ENTNOMMENEN ARTIKELS IM RAHMEN DES ANHEBEVORGANGS**

FULLY AUTOMATED ROBOTIC PICKING SYSTEM AND PICKING METHOD WITH SENSOR ASSEMBLY FOR MEASURING A REMOVED ITEM AS PART OF THE LIFTING PROCESS

SYSTÈME DE PRÉPARATION DE COMMANDES ROBOTIQUE ENTIÈREMENT AUTOMATIQUE ET PROCÉDÉ DE PRÉPARATION DE COMMANDES POURVU DE DISPOSITIF CAPTEUR PERMETTANT DE MESURER UN ARTICLE ENLEVÉ LORS DU PROCESSUS DE LEVAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2019 DE 102019135452**

(43) Veröffentlichungstag der Anmeldung:
**23.06.2021 Patentblatt 2021/25**

(73) Patentinhaber: **IGZ Ingenieurgesellschaft für logistische Informationssysteme mbH**
**95685 Falkenberg (DE)**

(72) Erfinder: **Dipl. Ing. Zrenner, Johann**
**95685 Falkenberg (DE)**

(74) Vertreter: **Strehl Schübel-Hopf & Partner**
**Maximilianstrasse 54**
**80538 München (DE)**

(56) Entgegenhaltungen:
**WO-A1-2019/169420    WO-A1-2019/240272**
**WO-A2-2019/169418    JP-A- 2018 047 544**
**US-A1- 2017 088 360    US-A1- 2017 137 236**
**US-A1- 2018 065 818    US-A1- 2018 178 992**
**US-A1- 2019 071 267**

**Beschreibung**

Die Erfindung betrifft ein Kommissioniersystem mit einem Roboter und einem Greifarm zur Entnahme eines Artikels aus einem Quellbehälter und zur Ablage des Artikels in einem Zielbehälter/Karton nach dem Oberbegriff des Anspruchs 1.

Aus US 9,174,343 B2 ist ein gattungsgemäßes Kommissioniersystem bekannt, welches eine ID-Lesevorrichtung zum Identifizieren des vom Greifarm gegriffenen Behälters umfasst. Die Steuerung liest abhängig von den gelesenen Identifikationsdaten Eigenschaften des gegriffenen Artikels aus einer Datenbank. Falls der Artikel nicht die erwarteten Eigenschaften hat, wird er in einem separaten Zielbehälter abgelegt, ansonsten in einem regulären Zielbehälter.

Aus der WO 2018/132855 A2 ist ein weiteres derartiges Kommissioniersystem bekannt. Durch eine am Greifarm angeordnete ID-Lesevorrichtung wird mit Hilfe einer Datenbank ein Typ des gegriffenen Artikels bestimmt. Die erfassten Daten können eine Länge, Breite und/oder Höhe des Objekts umfassen. Unter anderem kann mit Hilfe eines am Roboter angeordneten Wiege- oder Kraftsensors ein Gewicht des Objekts erfasst werden und zu Identifikation des Objekts bzw. zur Bestimmung einer Anzahl von gleichzeitig gegriffenen Objekten genutzt werden.

Beim Umlagern von Artikeln aus einem Quellbehälter in einen Zielbehälter/Karton mit einem Roboter müssen eine Vielzahl von Parametern bestimmt werden, die die Trajektorie des Greifarms beschreiben. Dabei muss unter der Maßgabe, den Artikel möglichst wenig zu beschädigen, eine möglichst hohe Arbeitsgeschwindigkeit erreicht werden.

Dies kann insbesondere durch eine Kombination aus kurzen Wegen und einem sanften Ablagevorgang erreicht werden.

Beim Greifen von Artikeln mit unbekannten Abmessungen und/oder Orientierungen wird beides erschwert durch eine mangelhafte Kenntnis der Höhe des Artikels, d.h. der Dimension des Artikels in Z-Richtung, bzw. der Blickrichtung der Kamera. Selbst wenn in den Stammdaten die Höhe in einer Orientierung hinterlegt ist, kann der Artikel mit einer anderen Orientierung gegriffen werden und eine andere tatsächliche Höhe bezogen auf den Greifvorgang haben. Wird der Quellbehälter in Draufsicht mit einer Kamera beobachtet, ist die der Kamera abgewandte Rückseite des Artikels unsichtbar. Dies gilt auch bei 3D-Kameras wie beispielsweise TOF-Kameras, Structured Light Kameras oder Projected-Texture Stereovision-Systemen, die nur die Vorderseite des Objekts erkennen können und zudem eine mangelhafte Auflösung in Z-Richtung haben oder in Z-Richtung nicht blicken können, weil mehrere Objekte nebeneinander liegen. Selbst bei Artikeln mit bekannten Dimensionen, in denen eine Lage der Artikelrückseite aus einer Lage der Artikelvorderseite abgeleitet werden könnte, kann daher erstere nur ungenau bestimmt werden. Ferner ist es möglich, dass absichtlich oder unabsichtlich mehrere Artikel gleichzeitig gegriffen werden und/oder sich die Artikel beim Hochheben unter ihrem Eigengewicht deformieren, z.B. bei Tüten. Schließlich kann sich auch der Greifer, insbesondere ein Sauggreifer, unter dem Gewicht des Artikels deformieren.

Ein weiterer Umstand, der die Kenntnis der genauen Lage der Artikelrückseite erschwert, ist eine ungenaue Kenntnis der exakten Position, an der der Greifer den Artikel greift. Die genaue Kenntnis der Lage der Artikelrückseite ist aber für die Optimierung der Trajektorie des Greifers vorteilhaft.

Bei der Entnahme des Artikels wird dieser zunächst in einem Anhebevorgang angehoben, dann über den Zielbehälter/Karton geführt und in einem Ablagevorgang im Zielbehälter/Karton abgelegt. Je höher der Artikel ist bzw. je weiter er den Greifer des Greifarms in Z-Richtung überragt, desto höher muss er im Anhebevorgang gehoben werden, um zu vermeiden, dass er bei einer anschließenden horizontalen Bewegung bzw. Schwenkbewegung mit dem Behälterrand des Quellbehälters kollidiert. Der Artikel wird daher höher gehoben als es eigentlich notwendig wäre. Die Steuerung bestimmt den Hub, indem ein Sicherheitszuschlag zu einem geschätzten Minimalwert addiert wird, der als eine Summe aus der Höhe der Behälterwand und einer maximalen Höhe des Artikels berechnet wird.

Beim Ablegen des Artikels würde ein ungebremstes Auftreffen des Artikels mit geschlossenem Greifer auf dem Boden des Zielbehälters zu einer Beschädigung des Artikels führen. Der Greifer könnte den bereits auf dem Boden des Zielbehälters stehenden Artikel durch eine Fortsetzung der Ablagebewegung zerquetschen oder beschädigen. Deswegen wird der Artikel in einer bestimmten Höhe losgelassen bzw. fallengelassen. Die Abwurfhöhe entspricht mindestens einem Sicherheitsabstand, der aufgrund der unbekannten Artikelhöhe eingeführt werden muss und hinreichend groß sein muss. Dies kann zu Schäden des Artikels führen. Bestimmte Klassen von empfindlichen Artikeln können daher nicht in robotergestützten Kommissioniersystemen kommissioniert werden. Da der Artikel abgeworfen und nicht ordentlich abgelegt wird, kann der Artikel nach dem Abwurf weiterrollen oder hüpfen und auch zuvor abgelegte Artikel bewegen oder umkippen. Daher ergibt sich ein unordentliches Stapelbild im Zielbehälter und die Packdichte wird reduziert. Eine genaue Kenntnis der Lage der Artikelunterkante ermöglicht ein sanftes Ablegen des Artikels mit einem rechtzeitig vor dem Erreichen der Ablageposition eingeleiteten Bremsvorgang des Greifarms und/oder einem Fallenlassen aus geringer Höhe.

Der Erfindung liegt die Aufgabe zugrunde, ein gattungsgemäßes Kommissioniersystem und Kommissionierverfahren zu verbessern, insbesondere im Hinblick auf ein schonendes Handling der Artikel bei gleichzeitig hohem Durchsatz.

Aus der DE 10 2019 003 334 A1 und der WO 2019169420A1 ist ein Robotergreifer mit einer horizontal ausgerichteten Sensoranordnung bekannt. Weiterer relevanter Stand der Technik ist in den Dokumenten

DE 10 2018 202389 A1, DE 11 2017 007 398 T5,

DE 10 2016 107 268 A1, DE 10 2014 005 434 B4 und US 2017 0136 632 A1 offenbart. WO 2019/169420 A1 offenbart die Merkmale des Oberbegriffs des Anspruchs 1.

Die Aufgabe wird gelöst durch ein Kommissioniersystem und ein Kommissionierverfahren mit den Merkmalen der unabhängigen Ansprüche. Vorteilhafte Ausgestaltungen der Erfindung ergeben sich aus den Unteransprüchen.

Die Erfindung betrifft ein Kommissioniersystem mit einem Roboter, einer Kamera und einer Steuerung. Der Roboter umfasst einen Greifarm zur Entnahme eines Artikels aus einem Quellbehälter mit einem Behälterrand und zur Ablage des Artikels in einen Zielbehälter/Karton. Die Kamera ist zum Erfassen wenigstens des Quellbehälters in einer Draufsicht ausgelegt, insbesondere über dem Quellbehälter angeordnet. Die Kamera kann insbesondere an einem Tragarm angeordnet sein, der an einem Sockel des Roboters befestigt ist. Die Steuerung ist dazu ausgelegt, den Greifarm abhängig von den von der Kamera erfassten Bilddaten derart zu steuern, dass der Greifarm genau einen Artikel in optimaler Position greift, in einem Anhebevorgang anhebt, über den Zielbehälter/Karton führt und in einem Ablagevorgang in den Zielbehälter/Karton ablegt.

Der Zielbehälter kann ein Kunststoffbehälter oder Karton, insbesondere Versandkarton oder ein sonstiger üblicher Ladungsträger, wie z.B. eine Gitterbox oder eine Palette sein. Auch der Quellbehälter kann ein Kunststoffbehälter oder Karton oder ein sonstiger üblicher Ladungsträger, wie z.B. eine Gitterbox oder eine Palette sein.

Es wird ferner vorgeschlagen, dass das Kommissioniersystem eine insbesondere im Wesentlichen horizontal ausgerichtete Sensoranordnung zum Erkennen einer Lage einer Unterkante des Artikels im Rahmen des Anhebevorgangs umfasst und die Steuerung dazu ausgelegt ist, wenigstens den Ablagevorgang abhängig von der erkannten Lage der Unterkante des Artikels zu steuern. Durch genaue Kenntnis der Lage der Unterkante des Artikels frühzeitig im Bewegungsablauf kann die Trajektorie so optimiert werden, dass der Artikel nicht höher als nötig angehoben wird und nicht aus einer großen Abwurfhöhe abgeworfen werden muss.

Die horizontal ausgerichtete Sensoranordnung ist in einer besonders vorteilhaften Ausgestaltung der Erfindung als Flächenscanner, wie zum Beispiel als 2D-LiDAR-Sensor, oder Kamera ausgebildet und überwacht insbesondere die gesamte Öffnung des Quellbehälters. Die Sensoranordnung soll als "horizontal ausgerichtet" gelten, wenn dies für die überwachte Fläche gilt - zumindest innerhalb eines Toleranzbereichs, z.B. eines Toleranzbereichs von ± 10°.

In einer Ausgestaltung der Erfindung wird vorgeschlagen, dass die Steuerung dazu ausgelegt ist, durch Bewegen des Greifers oder eines vom Greifer gegriffenen Kalibrierungskörpers in die überwachte Ebene der Sensoranordnung die Sensoranordnung zu kalibrieren. Die Steuerung kann dazu den Greifer oder einen davon gehaltenen Kalibrierungskörper absenken, bis er die überwachte Ebene erreicht hat. Die Kalibrierung kann an mehreren Punkten in der X-Y-Ebene erfolgen, um z.B. eine Schrägstellung der überwachten Ebene berücksichtigen zu können oder um die Präzision zu erhöhen.

Erfindungsgemäß ist die Steuerung dazu ausgelegt, aus der erfassten Lage der Unterkante des Artikels eine Höhe des Artikels zu berechnen und wenigstens den Ablagevorgang abhängig von der erkannten Höhe des Artikels zu steuern. Dadurch kann bei aus den Stammdaten bekannten Abmessungen des Artikels eine Orientierung des Artikels am Robotergreifer erkannt werden. Im Zusammenspiel mit der aus den Kamerabildern erfassbaren Fläche kann das Volumen des gegriffenen berechnet werden. Es kann gegebenenfalls erkannt, werden ob zwei Artikel gemeinsam gegriffen wurden.

Unter "ausgelegt" soll in diesem Zusammenhang eine entsprechende Hardware- und Software-Konfiguration der Steuerung verstanden werden.

Die Kamera kann insbesondere eine 3D-Kamera sein, beispielsweise eine Time-Of-Flight (TOF)-Kamera, eine Structured Light Kamera oder ein Projected-Texture-Stereovision-System.

Ferner wird vorgeschlagen, dass die horizontal ausgerichtete Sensoranordnung dazu ausgelegt ist, zu überwachen, ob ein von dem Artikel eingenommenes Artikelvolumen eine überwachte horizontale Ebene schneidet und die Steuerung dazu ausgelegt ist, eine Z-Position des Greifarms zu registrieren, in welcher das Artikelvolumen die horizontale Ebene verlassen hat, wobei aus der erkannten Z-Position des Greifarms die Lage der Unterkante des Artikels im Koordinatensystem des Greifers berechnet wird. Auf diese Weise kann die Lage der Unterkante des Artikels sehr einfach und schnell zum frühestmöglichen Zeitpunkt detektiert werden.

Auch Breite und Form des Artikels kann beim Anheben abgetastet werden, z.B. in einer besonders vorteilhaften Ausgestaltung mit einem 2D-Flächenscanner mit zusätzlichen Funktionen zur Messung der Objektgröße, -form etc. oder auch mit Lichtgitter oder Kamera als Sensor.

Ferner wird vorgeschlagen, dass die Steuerung dazu ausgelegt ist, den Greifarm derart zu steuern, dass der Artikel in einer Abwurfhöhe losgelassen wird, und die Abwurfhöhe abhängig von der erkannten Lage der Unterkante Rands des Artikels zu berechnen. Die Abwurfhöhe kann insbesondere gegenüber dem Stand der Technik stark reduziert werden.

Ferner wird vorgeschlagen, dass die Sensoranordnung dazu ausgelegt ist, einen Schwenkfreigabezeitpunkt zu detektieren, in dem die Unterkante des Artikels während des Anhebevorgangs über den Behälterrand des Quellbehälters hinaus angehoben wurde. Dadurch kann gewährleistet werden, dass der Artikel nicht mit dem Behälterrand kollidiert. Insbesondere kann die Steuerung dazu ausgelegt sein, einen Abbruchzeitpunkt des Anhebevorgangs abhängig von dem Schwenkfreigabezeitpunkt zu bestimmen.

Die Trajektorie wird nicht nur auf die Höhe der Behälterwand des Quellbehälters optimiert, sondern auch die Höhe der Behälterwand des Zielbehälters wird berücksichtigt, so dass auch dort Kollisionen vermieden werden können. Wenn der Zielbehälter höher ist als der Quellbehälter, kann zum Beispiel beim Herausnehmen aus dem Quellbehälter der Anhebevorgang erst dann abgebrochen werden, wenn auch die Höhe des Zielbehälters erreicht ist oder der Artikel kann während des Schwenkvorgangs weiter angehoben werden. Umgekehrt kann der Artikel während des Schwenkvorgangs abgesenkt werden, wenn die Behälterwand des Zielbehälters niedriger ist als diejenige des Quellbehälters.

In einer besonders vorteilhaften Ausgestaltung der Erfindung wird vorgeschlagen, dass die Sensoranordnung insbesonde höhenverstellbar an einem Sockel des Roboters angeordnet ist. Dadurch kann die Sensoranordnung an unterschiedliche Höhen der Fördertechnik und/oder der Behälter angepasst werden.

Ferner wird vorgeschlagen, dass die die Steuerung dazu ausgelegt ist, die von der Sensoranordnung erfassten Daten zur Identifikation/Verifikation des Artikels zu nutzen. Dies kann unmittelbar dadurch geschehen, dass die Sensoranordnung einen Barcode, QR-Code oder RFID-Codes des Artikels liest. Insbesondere kann der Artikel aber auch anhand seiner wie oben beschrieben detektierten Artikelhöhe verifiziert oder identifiziert werden, sofern nur ein Artikel mit der detektieren Artikelhöhe in Frage kommt.

Insbesondere kann die die Steuerung dazu ausgelegt sein, die Identifikation zur Ermittlung von Stammdaten zu nutzen. Aus den Stammdaten können dann weitere Informationen zum Artikel, beispielsweise seine Länge, seine Breite sein Gewicht, ein Grad der Zerbrechlichkeit oder dergleichen ermittelt werden, die dann im weiteren Verlauf des Kommissioniervorgangs genutzt werden können.

Ferner wird vorgeschlagen, dass die Steuerung dazu ausgelegt ist, die Lage der Unterkante und die von der Kamera erfassten Daten und/oder die in Stammdaten hinterlegten Abmessungen zu nutzen, um eine Anzahl von gegriffenen Artikeln zu erkennen. Wenn beispielsweise eine vom Sensor erfasste Breite der doppelten Breite eines gemäß den Stammdaten erwarteten Artikels entspricht, erkennt die Steuerung, dass zwei Artikel gegriffen wurden.

Ferner wird vorgeschlagen, dass die Steuerung dazu ausgelegt ist, die Lage der Unterkante und die von der Kamera erfassten Daten und/oder die in Stammdaten hinterlegten Abmessungen zu nutzen, um eine Orientierung von gegriffenen Artikeln zu erkennen und im Ablagevorgang zu nutzen, um durch ein optimiertes Schlichtmuster eine Packdichte im Zielbehälter zu erhöhen. Aus der Lage der Unterkante kann die Artikelhöhe berechnet werden und daraus gefolgert werden, auf welcher von drei Orientierungen eines quaderförmigen Artikels der Sauggreifer den Artikel gegriffen hat, d.h. ob er längs oder quer an dem Sauggreifer hängt. Abhängig von der so erkannten Orientierung kann der Artikel an einem zur Optimierung der Packdichte geeignet gewählten Ort und in einer geeigneten Orientierung abgelegt werden, wobei der Artikel um eine Längsachse eines Greifers gedreht werden kann, um die Seitenkanten parallel zu bereits im Zielbehälter abgelegten Artikeln oder zu den Behälterwenden auszurichten, oder gegebenenfalls auch gekippt werden kann. Ferner ist es auch möglich, den Artikel abzulegen und umzugreifen, wenn die erkannte Orientierung zur Optimierung des Schlichtmusters ungeeignet ist.

In einer weiteren Ausgestaltung der Erfindung wird vorgeschlagen, dass das Kommissioniersystem zur Entnahme von Artikeln aus mehreren Quellbehältertypen mit unterschiedlichen Quellbehälterhöhen ausgelegt ist, wobei die horizontal ausgerichtete Sensoranordnung so angeordnet werden kann, dass sie einen Bereich oberhalb einer Behälterwand desjenigen Quellbehältertyps mit der höchsten Quellbehälterhöhe überwacht. Dadurch das Kommissioniersystem ohne Umrüstzeiten zur Entnahme von Artikeln aus Quellbehältern mit verschiedenen Höhen genutzt werden.

In einer besonders vorteilhaften Ausgestaltung der Erfindung ist die horizontal ausgerichtete Sensoranordnung zur Anpassung an verschiedene Quellbehälterhöhen höhenverstellbar, so dass das System einfach umgerüstet werden kann.

In einer weiteren Ausgestaltung der Erfindung wird vorgeschlagen, dass das Kommissioniersystem mehrere horizontal ausgerichtete Sensoranordnungen umfasst, die zur Überwachung von Quellbehältertypen mit unterschiedlichen Quellbehälterhöhen auf verschiedenen Höhen angeordnet sind. Dadurch können der Zeitpunkt der Schwenkfreigabe und des Abbruchs des Hubvorgangs für jede Behälterhöhe optimal bestimmt werden. Unnötige Bewegungen des Greifarms können vermieden werden.

Ferner wir vorgeschlagen, die von der Sensoranordnung erfassten Daten zur Ermittlung einer Breite und/oder Form des Artikels zu nutzen, insbesondere für nicht quaderförmige Artikel. Eine als Flächenscanner mit Objektbreitenerkennung ausgestaltete Sensoranordnung kann insbesondere eine Breite bzw. einer Schnittfläche des Artikels mit der überwachten Ebene erkennen. Während sich diese Breite bzw. ein von dem Artikel eingenommener Winkelbereich im Verlauf des Hebevorgags nicht ändert, wenn der Artikel ein vertikal ausgerichteter Quader oder Zylinder ist, kann z.B. die vertikale Orientierung einer Flasche anhand dieses Verlaufs erkannt werden.

In einer weiteren Ausgestaltung der Erfindung wird vorgeschlagen, dass die Steuerung dazu ausgelegt ist, aus den Kameradaten der über dem Quellbehälter angeordneten Kamera einen Lagewinkel des Artikels relativ zu den Wänden des Quellbehälters zu extrahieren, und aus den Signalen der horizontal ausgerichteten Sensoranordnung in Kombination mit dem Lagewinkel die Seitenlängen des Artikels in Draufsicht zu berechnen. Aus den Kameradaten wird der Lagewinkel in Bezug auf die Sichtachse der Sensoranordnung berechnet. So können die Effekte perspektivischer Verkürzungen eliminiert werden und die während des Anhebevorgangs gemessenen Seitenlängen können mit der gemäß den Stammdaten erwarteten bzw. an Hand der Kamera in Draufsicht Seitenlängen abgeglichen werden, um so ein fehlerhaftes Greifen des Artikels zu erkennen.

In einer weiteren Ausgestaltung der Erfindung wird vorgeschlagen, dass das Kommissioniersystem ferner eine im Wesentlichen vertikal ausgerichtete Sensoranordnung in einem Schwenkbereich des Greifarms umfasst, wobei die Steuerung dazu ausgelegt ist, während eines Schwenkvorgangs eine Länge des Artikels in Schwenkrichtung aus den Daten der vertikal ausgerichteten Sensoranordnung zu detektieren. In ähnlicher Weise wie die Höhe des Artikels während des Anhebevorgangs durch die Überwachung einer horizontalen Ebene vermessen werden kann, kann während des Schwenkvorgangs die Länge des Artikels in Schwenkrichtung durch die vertikal ausgerichtete Sensoranordnung vermessen werden, die erkennt, wann der Artikel in die überwachte Ebene eintritt und wann er die Ebene verlässt. Sofern die Breite und Höhe des Artikels bereits während des Anhebevorgangs vermessen wurde, kann durch die Vermessung der Länge während des Schwenkvorgangs die letzte verbleibende Längenausdehnung vermessen werden. Dazu kann der Artikel gegebenenfalls um die vertikale Achse gedreht werden. Die vertikal ausgerichtete Sensoranordnung kann in denkbaren Ausgestaltungen auch in einem zwischen dem Quellbehälter und dem Zielbehälter angeordneten Tisch oder einer Auffangschale angeordnet sein und vertikal nach oben strahlen. Der Artikel kann beim Durchfahren eines oder mehrerer Flächenscanner gedreht werden, um Längendimensionen des Artikels in unterschiedlichen Richtungen abzutasten.

In einer weiteren Ausgestaltung der Erfindung wird vorgeschlagen, dass das Kommissioniersystem eine weitere Sensoranordnung umfasst, insbesondere eine weitere Kamera, zur Aufnahme einer Unterseite des Artikels während des Schwenkvorgangs. Dadurch können ergänzende Informationen zu den Abmessungen des Artikels, der Anzahl von gegriffenen Artikeln oder der Orientierung des Artikels gewonnen werden und/oder ein Barcode oder anderes Identifikationsmerkmal kann gelesen werden.

Die weitere Kamera kann am Sockel des Roboters angebracht sein, insbesondere eines mobilen Roboters. Während des Schwenkvorgangs kann der Artikel leicht schräg gestellt werden, um die Unterseite besser für die Kamera erkennbar zu machen. Die Kamera kann ebenfalls schräg gestellt werden, um eine Montage nah am Sockel des Roboters zu erlauben. Abhängig von den von der Kamera erfassten Daten kann eine Korrektur des Lagewinkels, Überprüfung der Seitenlängen für korrekte Schlichtung, Fehlerkorrektur falls mehrere Artikel gegriffen wurden und/oder ein Lesen des Barcodes erfolgen. Durch Kombination mit Höhen/Unterkantenmessung ist ein Abstand der Unterseite des Artikels bekannt, was eine gute Bildschärfe ohne Autofokus-Einstellungen ermöglicht.

Ein weiterer Aspekt der Erfindung betrifft ein Kommissionierverfahren gemäß Anspruch 18, umfassend die Schritte Entnahme eines Artikels aus einem Quellbehälter mit einem Behälterrand mit einem Greifarm eines Roboters und Ablage des Artikels in einen Zielbehälter mit dem Greifarm des Roboters. Das Kommissionierverfahren umfasst ferner die Schritte Erfassen wenigstens des Quellbehälters in einer Draufsicht mit einer Kamera und Steuerung des Greifarms abhängig von den von der Kamera erfassten Bilddaten derart, dass der Greifarm den Artikel greift, in einem Anhebevorgang anhebt, über den Zielbehälter führt und in einem Ablagevorgang in den Zielbehälter ablegt.

Es wird vorgeschlagen, dass das Kommissioniersystem ferner die Schritte Erkennen einer Lage einer Unterkante des Artikels während des Anhebevorgangs mittels einer im Wesentlichen horizontal ausgerichteten Sensoranordnung und Steuern wenigstens des Ablagevorgangs abhängig von der erkannten Lage der Unterkante des Artikels umfasst.

Als Greifer kommen alle Arten von Endeffektoren von Robotern in Betracht, beispielsweise Sauggreifer oder Klauengreifer.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen.

Dabei zeigen:

Fig. 1 ein Kommissioniersystem nach einem Ausführungsbeispiel der Erfindung in einer Seitenansicht;
Fig. 2 das Kommissioniersystem aus Fig. 1 in einer Draufsicht;
Fig. 3 ein Ablaufdiagramm eines erfindungsgemäßen Kommissionierverfahrens;
Fig. 4 ein Kommissioniersystem nach einem weiteren Ausführungsbeispiel der Erfindung; und
Fig. 5 ein Kommissioniersystem nach einem weiteren Ausführungsbeispiel der Erfindung.

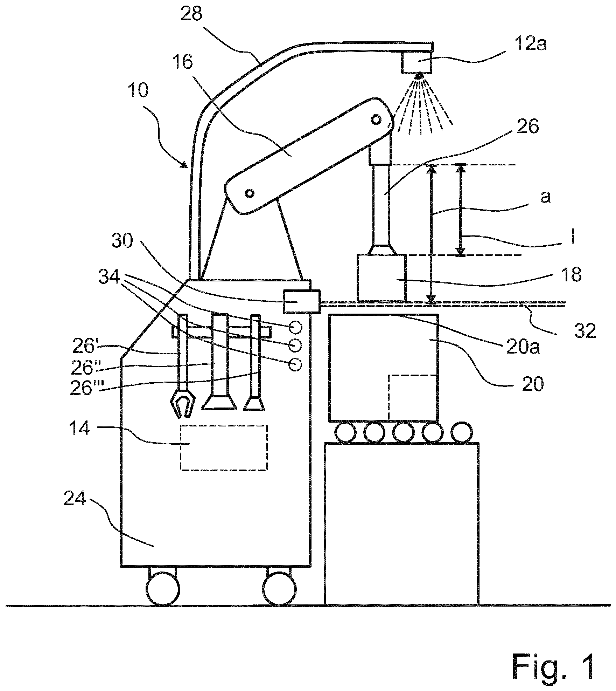

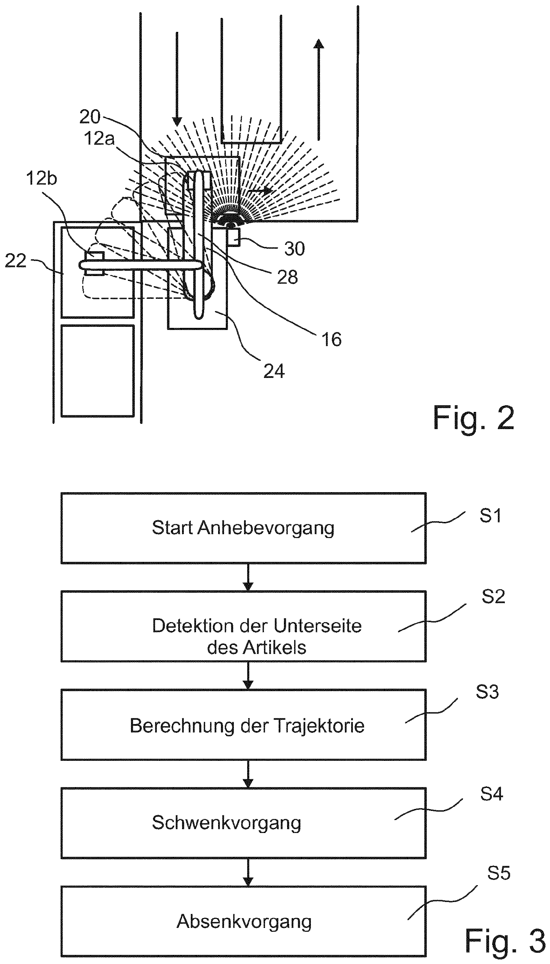

Figuren 1 und 2 zeigen ein Ausführungsbeispiel der Erfindung.

Ein erfindungsgemäßes Kommissioniersystem umfasst einen Roboter 10, zwei Kameras 12a, 12b und eine Steuerung 14. Der Roboter 10 umfasst einen Greifarm 16 zur Entnahme eines Artikels 18 aus einem Quellbehälter 20 mit einem Behälterrand 20a bzw. einer Behälterwand und zur Ablage des Artikels 18 in einen Zielbehälter 22.

Der Roboter 10 ist als mobiler Roboter 10 auf einem fahrbaren Sockel 24 ausgestaltet und kann an einem auch für eine menschliche Kommissionierperson ausgelegten Kommissionierplatz aufgestellt werden. Das Kommissioniersystem bzw. der Kommissionierplatz umfasst zudem Fördertechnik für die Quellbehälter 20 und Zielbehälter 22. Die Höhe des Sockels 24 bzw. des Roboters 10 ist bezogen auf die Fördertechnik so eingestellt, dass der Greifarm 16 des Roboters 10 gut in die Behälter 20, 22 greifen kann.

Der Roboter 10 ist mit einem als Sauggreifer ausgestalteten Greifer 26 ausgestattet, der abhängig von der zu kommissionierenden Ware ausgetauscht bzw. gewählt werden kann. An einer Seite des Sockels 24 sind dazu verschiedene Greifer 26' - 26''' angeordnet, die der Roboter 10 selbsttätig als Endeffektoren auswählen und an- bzw. abkoppeln kann.

Die Kamera 12a ist zum Erfassen wenigstens des Quellbehälters 20 in einer Draufsicht ausgelegt. Sie umfasst eine 3D-Kamera und eine 2D-Kamera, beispielsweise mit CCD-Chip. In dem in Fig. 1 dargestellten Beispiel ist die Kamera 12a an einem Tragarm 28 über dem Quellbehälter 20 angeordnet. Der Tragarm 28 ist an einem Sockel 24 des Roboters 10 befestigt und wird beim Bewegen des fahrbaren Sockels 24 mitbewegt.

Die Steuerung 14 ist durch eine geeignete Steuerungssoftware dazu ausgelegt, den Greifarm 16 abhängig von den von der Kamera 12a erfassten Bilddaten derart zu steuern, dass der Greifarm 16 genau einen Artikel 18 im Quellbehälter 20 an einer optimalen Position greift, in einem Anhebevorgang anhebt, über den Zielbehälter 22 führt und in einem Ablagevorgang in den Zielbehälter 22 ablegt.

Das Kommissioniersystem umfasst eine im Wesentlichen horizontal ausgerichtete, als Flächenscanner ausgestaltete Sensoranordnung 30 zum Erkennen einer Lage einer Unterkante des Artikels 18 während des Anhebevorgangs. Die Sensoranordnung 30 ist höhenverstellbar an dem Sockel 24 des Roboters 10 angeordnet. Die Höhe wird im Betrieb so eingestellt, dass die überwachte Ebene 32 knapp oberhalb der Oberkante der Behälterwand bzw. des Behälterrands 20a des Quellbehälters 20 liegt. Die Sensoranordnung 30 hat einen hinreichend großen Winkelbereich, um die komplette Öffnungsfläche des Quellbehälters 20 zu überwachen.

In einer Ausgestaltung der Erfindung ist die Höhe der Sensoranordnung 30 in mehreren Stufen verstellbar und der Benutzer gibt die aktuell eingestellte Stufe über eine Benutzerschnittstelle (nicht dargestellt) als Parameter der Steuerungssoftware ein.

Befestigungsstrukturen 34 wie beispielsweise Löcher zum Montieren der Sensoranordnung 30 auf verschiedenen Höhen können dazu am Sockel 24 des Roboters 10 vorgesehen sein und sind in Fig. 1 gestrichelt dargestellt. In einer weiteren Ausgestaltung der Erfindung umfasst der Roboter 10 Mittel zum Detektieren der eingestellten Höhe der Sensoranordnung 30, z.B. Schalter in oder an den Befestigungsstrukturen 34.

In einer Ausgestaltung der Erfindung kann die Steuerung 14 die Höhe der überwachten Ebene der Sensoranordnung 30 in einem kalibrierungslauf selbsttätig mit Hilfe des Greifarms 16 des Roboters 10 messen. Dazu kann die Steuerung 14 den Greifarm 16 absenken, bis der Greifer 26 oder ein von dem Greifer 26 gehaltener Kalibrierungskörper (Kugel, Kegel, Quader) mit bekannter Höhe in die überwachte Ebene eintritt. Dieser Eintrittspunkt entspricht der Z-Koordinate der überwachten Ebene im Koordinatensystem des Roboters 10. Um genauere Kalibrierungsergebnisse zu erhalten und/oder um ggf. eine Neigung der überwachten Ebene berücksichtigen zu können kann die Messung an mehreren Punkten vorgenommen werden, z.B. an drei Punkten oder an den vier Ecken des Behälters.

In weiteren Ausgestaltungen der Erfindung, in denen das Kommissioniersystem zum Bedienen von Quellbehältern mit unterschiedlichen Höhen ausgelegt ist, können mehrere Sensoranordnungen auf verschiedenen Höhen angeordnet werden oder die Sensoranordnung wird auf die Höhe des höchsten zu bedienenden Quellbehälters eingestellt.

In der Steuerungssoftware ist ferner eine Länge 1 des angebrachten Greifers 26 hinterlegt, so dass die Z-Koordinate des Endes des Greifers 26 berechnet werden kann und bekannt ist. Aus den von der Sensoranordnung 30 erfassten Daten berechnet die Steuerung 14 daher einen Abstand a, um den die Unterkante des Artikels 18 gegenüber dem Ende des Greifers 26 nach unten versetzt ist.

Die Sensoranordnung 30 kann als Laser-Flächenscanner, Lichtvorhang oder dergleichen ausgestaltet sein und detektiert das Vorhandensein oder Nichtvorhandensein eines Gegenstands in einer im Wesentlichen horizontal verlaufenden Ebene 32. Die Lage der Unterkante des Artikels 18 wird insbesondere dadurch detektiert, dass ein Signalpegel, der das Vorhandensein oder Nichtvorhandensein eines Gegenstands anzeigt, von einem Wert auf den anderen Wert wechselt. Dadurch wird erkannt, dass der Artikel 18 die überwachte Ebene 32 verlassen hat. Da die Detektion während des Anhebevorgangs erfolgt, bedeutet dies, dass der Artikel 18 über die überwachte Ebene 32 hinausgehoben wurde. Es sind auch Lösungen denkbar, in denen die Sensoranordnung 30 kamerabasiert arbeitet, sofern der Bildhintergrund hinreichend klar definiert ist. Die die horizontal ausgerichtete Sensoranordnung 30 ist damit dazu ausgelegt, zu überwachen, ob ein von dem Artikel 18 eingenommenes Artikelvolumen eine vorgegebene horizontale Ebene 32 schneidet.

Die Lage der Unterkante des Artikels 18 wird dadurch detektiert, dass die Steuerung eine Z-Position des Greifarms 16 registriert, in welcher das Artikelvolumen die horizontale Ebene 32 verlassen hat, wobei aus der erkannten Z-Position des Greifarms 16 die Lage der Unterkante des Artikels 18 im Bezugsystem des Grei-

fers 26 bzw. Greifarms 16 berechnet werden kann.

Neben dem Scanner zur Detektion der Lage der Unterkante des Artikels 18 kann die Sensoranordnung 30 weitere Sensoren umfassen, die der Identifikation des Artikels 18 dienen, beispielswiese einen RFID-Scanner oder Barcode-Scanner. Die Identifikationsdaten können genutzt werden, um falsch im Quellbehälter abgelegte Artikel zu erkennen. Durch einen Abgleich der Artikelhöhe mit der Differenz aus der Position des Endes des Greifers 26 und der Lage der Unterkante des Artikels 18 kann eine Orientierung des Artikels 18 ermittelt werden, die bei der Wahl der Ablageposition und Ablageorientierung berücksichtigt werden kann. Einige der genannten Parameter oder auch die Identifikationsdaten des Artikels 18 können auch mit Hilfe einer Kamera 12a erfasst werden. Falls der Artikel 18 oder seine Orientierung der Vervollständigung des Kommissionierauftrags nicht zuträglich ist, kann der Artikel 18 in den Quellbehälter 20 zurückgelegt werden oder auf eine Ablagezone (nicht dargestellt) gelegt werden und gegebenenfalls in einer anderen Orientierung wieder aufgenommen werden.

Mit Hilfe der von der Sensoranordnung 30 erfassten Artikelhöhe kann ferner die Erkennung von Fehler-Artikeln ermöglicht werden. Fehler-Artikel sind Artikel, die nicht einer Erwartung entsprechen. Im Fall von sortenreinen Quellbehältern ist in den Stammdaten des Quellbehälters eine Artikelnummer oder ID der im Quellbehälter gelagerten Artikel verzeichnet. Die Steuerung 14 erwartet daher beim Greifen einen bestimmten Artikel, insbesondere mit einer bestimmten Höhe, Breite, Länge etc.. Wenn die von der Sensoranordnung 30 erfasste Artikelhöhe dieser Erwartung nicht entspricht, d.h. erfasste Artikelhöhe nicht mit der aus den Stammdaten gelesenen Artikelhöhe und ggf. auch nicht mit der Artikelbreite oder Länge übereinstimmt, war ein nicht den Stammdaten entsprechender Artikel im Quellbehälter gelagert. Die Steuerung 14 erkennt dann den Fehler und legt den Fehler-Artikel wieder ab, z.B. wieder in den Quellbehälter, und markiert den betroffenen Quellbehälter als fehlerhaft (Stammdatenfehler).

Der als fehlerhaft markierte Quellbehälter kann dann von einem Menschen überprüft werden. Falls vorhanden kann der Fehler-Artikel auch auf einem Ablageplatz abgelegt werden. Das Erkennen von Fehler-Artikeln wird auch als Verifikation des Artikels bezeichnet. Falls die Orientierung der Artikel unbekannt ist, wird ein Fehler-Artikel erkannt, wenn die erfasste Artikelhöhe weder mit der Höhe, der Breite noch der Länge aus den Stammdaten übereinstimmt. Falls die Sensoranordnung 30 neben der Artikelhöhe noch weitere Parameter erfassen kann, z.B. die Breite oder andere Eigenschaften der Form (rund, eckig), können auch diese Parameter mit den Stammdaten verglichen werden und Fehler-Artikel können erkannt werden.

Ferner kann mit Hilfe der Sensoranordnung 30 auch erkannt werden, dass eine Orientierung des Artikels in der horizontalen X-Y Ebene nicht mit der erwarteten Orientierung übereinstimmt. Die Steuerung 14 ermittelt aus den Kameradaten der Kamera 12a einen Mittelpunkt und einen Lagewinkel $\theta$ des Artikels und greift den Artikel im Falle eines Sauggreifers im Mittelpunkt und hebt den Artikel an. Beim Anheben bleibt der Lagewinkel $\theta$ unverändert oder der Artikel wird kontrolliert gedreht, beispielsweise so, dass Seitenkanten des Artikels parallel zur Blickrichtung der Sensoranordnung 30 ausgerichtet werden. Es kann aber unter Umständen vorkommen, dass Artikel beim Eingreifen in den Behälter verschoben werden, umkippen oder umherrollen, so dass die aus den Kameradaten der Kamera 12a ermittelten Daten zur Lage und Orientierung des Artikels nicht mit der tatsächlichen Lage und Orientierung des gegriffenen Artikels übereinstimmen. Auch solche Unstimmigkeiten können mit Hilfe der horizontal ausgerichteten Sensoranordnung 30 erkannt und beim Berechnen der Trajektorie berücksichtigt werden und der Winkel ggf. korrigiert werden. Der Artikel könnte auch auf einem Ablageplatz abgelegt werden und in einer korrekten Orientierung bzw. Position neu gegriffen werden.

Mit Hilfe der Sensoranordnung 30 kann die Steuerung 14 auch erkennen, wenn der Greifer den Artikel nicht im Mittelpunkt gegriffen hat. Wenn die Sensoranordnung 30 die seitlichen Ränder des Artikels erkennt, beispielsweise wenn sie als ortsauflösender 2D-Flächenscanner ausgestaltet ist, kann geprüft werden, ob die Positionen der seitlichen Ränder symmetrisch zur bekannten Mittelachse des Greifers verläuft, wie dies der Fall sein muss, wenn der Artikel in seinem Mittelpunkt gegriffen wurde. Abweichungen von dieser symmetrischen Anordnung können vermessen werden und z.B. beim Ablegen des Artikels berücksichtigt werden, so dass eine präzisere Schlichtung erreicht werden kann.

Die Steuerung 14 nutzt ferner die Lage der Unterkante und die von der Kamera erfassten Daten und/oder die in Stammdaten hinterlegten Abmessungen, um eine Anzahl von gegriffenen Artikeln zu erkennen. Wenn beispielsweise eine vom Sensor erfasste Breite der doppelten Breite eines gemäß den Stammdaten erwarteten Artikels entspricht, erkennt die Steuerung, dass - unabsichtlich - zwei Artikel gegriffen wurden.

Die Sensoranordnung 30 kann nicht nur das Vorhandensein des Artikels 18 in der überwachten Ebene 32 erkennen, sondern auch die von dem Artikel 18 in dieser Ebene eingenommene Breite und/oder Form, insbesondere für nicht quaderförmige Artikel, wie z.B. Flaschen. Die als Flächenscanner ausgestaltete Sensoranordnung 30 kann in dem Ausführungsbeispiel, in welchem der Flächenscanner eine Objektbreitenerkennung erlaubt, insbesondere eine Breite bzw. den Winkelbereich einer Schnittfläche des Artikels 18 mit der überwachten Ebene 32 erkennen, einen Verlauf dieses Werts während des Anhebevorgangs erfassen und z.B. die vertikale Orientierung einer Flasche anhand dieses Verlaufs erkennen.

Die Steuerung 14 ist ferner dazu ausgelegt, den Ablagevorgang und gegebenenfalls auch den Schwenkvorgang abhängig von der erkannten Lage der Unterkante des Artikels 18 zu steuern.

Sobald die Steuerung 14 erkannt hat, dass der Artikel 18 die überwachte Ebene 32 verlassen hat, wird der Anhebevorgang abgebrochen und der Schwenkvorgang zur horizontalen Bewegung des Artikels 18 eingeleitet. Dieser Zeitpunkt kann auch als Schwenkfreigabezeitpunkt bezeichnet werden und fällt mit einem Abbruchzeitpunkt des Anhebevorgangs zusammen. Es sind auch Ausgestaltungen der Erfindung denkbar, in denen der Abbruchzeitpunkt um eine kurze Zeitspanne gegenüber dem Schwenkfreigabezeitpunkt verzögert ist, der Artikel 18 also während des Schwenkens noch um einige Zentimeter höher gehoben wird. Der Schwenkvorgang ist eine im Wesentlichen horizontale Bewegung des Artikels 18, wobei gegebenenfalls Höhendifferenzen zwischen dem Quellbehälter 20 und dem Zielbehälter 22 ausgeglichen werden können.

Nachdem der Artikel 18 über den Zielbehälter 22 bewegt wurde, beginnt der Ablagevorgang, in dem der Greifer 26 bis zu einer Abwurfhöhe abgesenkt wird. Die Steuerung 14 steuert den Greifarm 16 derart, dass der Artikel 18 in der Abwurfhöhe losgelassen wird.

Die Steuerung 14 berechnet die Abwurfhöhe abhängig von der erkannten Lage der Unterkante des Artikels 18. Idealerweise wird der Artikel 18 sanft auf den Boden des Zielbehälters 22 gelegt oder auf bereits im Zielbehälter 22 vorhandene Artikel 18 abgelegt. In der Abwurfhöhe entspricht die Z-Position des Endes des Greifers 26 über dem Boden des Zielbehälters 22 bzw. der vorhandenen Artikel 18 der registrierten Z-Position des Greifarms 16, in welcher das Artikelvolumen im Verlauf des Anhebevorgangs die überwachte horizontale Ebene 32 verlassen hatte, wobei ein geringer Zuschlag für eine Fehlertoleranz vorgesehen sein kann. Die Trajektorie des Greifarms 16 wird so berechnet, dass dieser vor dem Erreichen der Abwurfhöhe abgebremst wird.

Es sind auch Ausgestaltungen der Erfindung denkbar, in denen der Artikel 18 nicht abgeworfen, sondern vollständig abgelegt wird, wobei ein in den Greifarm 16 integrierter Gewichtssensor (nicht dargestellt) das Erreichen der Ablageposition detektieren kann. Über die letzten Millimeter wird dann der Greifarm 16 langsam abgesenkt, um ein langsames Herantasten und einen hinreichend schnellen Stopp beim Erreichen der Ablageposition zu ermöglichen. Durch die erfindungsgemäß genauere Kenntnis der Lage Unterkante des Artikels 18 kann die Distanz, über welche dieses Herantasten erfolgt, auf ein Minimum reduziert werden, beispielsweise in typischen Anwendungen auf weniger als 10-20 mm, während nach dem Stand der Technik eine Ungenauigkeit in der Größenordnung vom 10-20 cm zu berücksichtigen wäre.

Die Oberflächentopologie der bereits vorhandenen Artikel 18 kann die Steuerung 14 aus den vorherigen Ablagevorgängen berechnen, wobei die Stammdaten der Artikel oder die mit Hilfe der Sensorvorrichtung erfassten Daten als die Abmessungen herangezogen werden. In dem in Fig. 1 und 2 dargestellten Ausführungsbeispiel umfasst das Kommissioniersystem eine weitere 3D-Kamera 12b (Fig. 2), die über dem Zielbehälter 22 angeordnet ist und die aktuelle Stapelkonfiguration detektiert. Die Wahl des Ablageplatzes erfolgt abhängig von der vorgefundenen Stapelkonfiguration mit geeigneten Algorithmen. Die Algorithmen optimieren insbesondere das Schlichtmuster bzw. eine Packdichte im Zielbehälter 22 und nutzen dazu mittelbar oder unmittelbar Lage der Unterkante und die von der Kamera erfassten Daten und/oder die in Stammdaten hinterlegten Abmessungen, und eine Orientierung gegriffenen des Artikels 18.

Der Übergang vom Anhebevorgang zum Schwenkvorgang und vom Schwenkvorgang zum Ablagevorgang erfolgt nicht abrupt sondern in einer optimierten Trajektorie mit ausreichenden Brems- und Beschleunigungswegen. Die gesamte Trajektorie kann nach dem Erkennen der Artikelhöhe bzw. der Lage der Unterkante des Artikels 18 beim Anhebevorgang berechnet werden.

Soweit das sichere und sanfte Ablegen betroffen ist, könnte die Sensoranordnung 30 auch oberhalb der Oberkante des Zielbehälters 22 angeordnet sein. Auch so könnte die Unterkante des Artikels 18 detektiert werden und die Abwurfhöhe entsprechend angepasst, minimiert oder eliminiert werden. Die Anordnung am Quellbehälter 20 hat aber den Vorteil, dass die für die Schwenkbewegung des Greifarms 16 benötigte Zeit für Rechenvorgänge genutzt werden kann und nicht nur der Ablagevorgang, sondern ggf. auch der Anhebe- und Schwenkvorgang optimiert werden können.

Fig. 3 ist ein schematisches Diagramm eines erfindungsgemäßen Kommissionierverfahrens, das mit dem in Fig. 1 und 2 dargestellten Kommissioniersystem ausgeführt werden kann. Das Kommissionierverfahren umfasst den Schritte S1 eines Starts des Anhebevorgangs zur Entnahme eines Artikels 18 aus einem Quellbehälter 20 mit einem Behälterrand 20a mit einem Greifarm 16 eines Roboters 10. Während des Anhebevorgangs wird in einem Schritt S2 eine Lage einer Unterkante des Artikels 18 mittels einer Sensoranordnung 30 erkannt. In einem Schritt S3 wird eine Trajektorie zur Überführung des Artikels 18 in den Zielbehälter 22 berechnet, und zwar abhängig von der erkannten Lage der Unterkante des Artikels 18. In einem Schritt S4 erfolgt ein Schwenkvorgang gemäß der zuvor berechneten Trajektorie und in einem Schritt S5 ein Absenkvorgang mit der Ablage des Artikels 18 in dem Zielbehälter 22.

Die Steuerung 14 ermittelt aus den Kameradaten der Kameral 12a einen Mittelpunkt, einen Lagewinkel θ des Artikels relativ zu den Wänden des Quellbehälters 20 und ein Verhältnis r = d1/d2 der Seitenlängen d1 und d2. Die scheinbare Breite A, die von der Sensoranordnung 30 gesehen wird, lässt sich als

$$A = d1 * \sin(\theta) + d2 * \cos(\theta)$$

ausdrücken, woraus sich die Ausdrücke

$$d1 = A/(\sin(\theta) + 1/r*\cos(\theta)),$$

$$d2 = A/(r*\sin(\theta) + \cos(\theta))$$

ableiten lassen. Diese während des Anhebevorgangs mit dem obigen Formeln ermittelten Seitenlängen können mit der gemäß den Stammdaten erwarteten bzw. an Hand der Kamera in Draufsicht erfassten Seitenlängen abgeglichen werden, um so ein fehlerhaftes Greifen des Artikels zu erkennen und auch Rückschlüsse auf die Position des Greifers zu ziehen.

Fig. 1 zeigt ein Ausführungsbeispiel der Erfindung, in der das Kommissioniersystem zur Entnahme von Artikeln aus mehreren Quellbehältertypen mit unterschiedlichen Quellbehälterhöhen ausgelegt ist, wobei die horizontal ausgerichtete Sensoranordnung 30 so angeordnet ist, dass sie einen Bereich oberhalb einer Behälterwand 20a des Quellbehältertyps mit der höchsten Quellbehälterhöhe überwacht. Wie bereits geschrieben kann in weiteren Ausgestaltungen der Erfindung die Sensoranordnung 30 höhenverstellbar sein, beispielsweise durch geeignete Befestigungsstrukturen 34 am Sockel 24 des Roboters 10, die in Fig. 1 gestrichelt dargestellt sind.

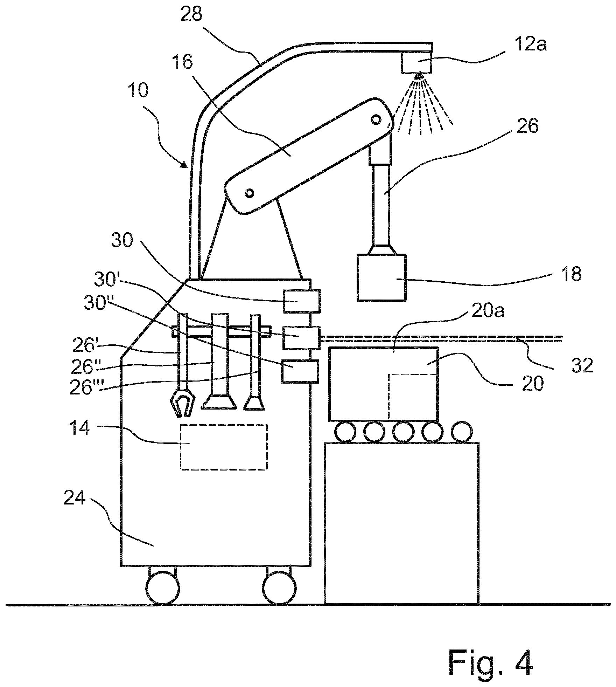

Fig. 4 zeigt eine weitere Ausgestaltung der Erfindung mit mehreren horizontal ausgerichteten Sensoranordnungen 30, 30', 30", die zur Überwachung von Quellbehältertypen mit unterschiedlichen Quellbehälterhöhen auf verschiedenen Höhen am Sockel 24 des Roboters 10 angeordnet sind.

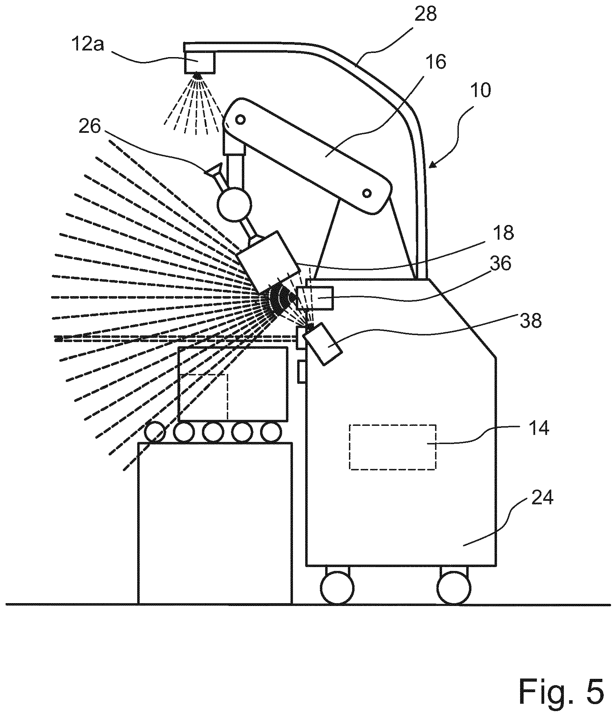

Fig. 5 zeigt eine weitere Ausgestaltung der Erfindung mit einer weiteren, im Wesentlichen vertikal ausgerichteten Sensoranordnung 36 in einem Schwenkbereich des Greifarms 16. Die Steuerung 14 ist dazu ausgelegt, während eines Schwenkvorgangs aus den Daten der vertikal ausgerichteten Sensoranordnung 36 eine Länge des Artikels 18 in Schwenkrichtung zu detektieren.

Das in Fig. 5 dargestellte Kommissioniersystem umfasst eine weitere, als Kamera 38 ausgestaltete Sensoranordnung und einen schwenkbaren bzw. drehbaren Greifer 26 mit zwei Saugköpfen, die wahlweise eingesetzt werden können. Die Kamera 38 ist leicht schräg stehend am Sockel 24 des Roboters 10 angeordnet. Die Kamera 38 kann eine Unterseite des Artikels während des Schwenkvorgangs aufnehmen und es können ergänzende Informationen zu den Abmessungen und der Form des Artikels 18 oder dem tatsächlichen Saugpunkt, d.h. dem Punkt, an dem der Greifer 26 den Artikel tatsächlich gegriffen hat, der Anzahl von gegriffenen Artikeln oder der Orientierung des Artikels 18 gewonnen werden und/oder ein Barcode oder anderes Identifikationsmerkmal kann gelesen werden. Während des Schwenkvorgangs wird dazu der Artikel 18 leicht schräg gestellt, um die Unterseite für die Kamera 38 besser erkennbar zu machen.

## Patentansprüche

1. Kommissioniersystem umfassend:

   - einen Roboter (10) mit einem Greifarm (16) zur Entnahme eines Artikels (18) aus einem Quellbehälter (20) mit einem Behälterrand (20a) und zur Ablage des Artikels (18) in einen Zielbehälter (22),
   - eine Kamera (12a) zum Erfassen wenigstens des Quellbehälters (20) in einer Draufsicht,
   - eine Steuerung (14), die dazu ausgelegt ist, den Greifarm (16) abhängig von den von der Kamera (12a) erfassten Bilddaten derart zu steuern, dass der Greifarm (16) den Artikel (18) greift, in einem Anhebevorgang anhebt, in einem Schwenkvorgang über den Zielbehälter (22) führt und in einem Ablagevorgang in den Zielbehälter (22) ablegt,

   wobei

   - das Kommissioniersystem eine im Wesentlichen horizontal ausgerichtete Sensoranordnung (30) wenigstens zum Erkennen einer Lage einer Unterkante des Artikels (18) während des Anhebevorgangs umfasst,

   **dadurch gekennzeichnet, dass**

   - die Steuerung (14) dazu ausgelegt ist, eine Trajektorie zur Überführung des Artikels (18) in den Zielbehälter (22) abhängig von der erkannten Lage der Unterkante des Artikels zu berechnen und den Ablagevorgang abhängig von der erkannten Lage der Unterkante des Artikels (18) zu steuern,

   wobei die Steuerung (14) dazu ausgelegt ist, aus der erfassten Lage der Unterkante des Artikels (18) eine Höhe des Artikels (18) zu berechnen und wenigstens den Ablagevorgang abhängig von der erkannten Höhe des Artikels (18) zu steuern und den Artikel mit einem rechtzeitig vor dem Erreichen der Ablageposition eingeleiteten Bremsvorgang des Greifarms und/oder einem Fallenlassen aus geringer Höhe sanft abzulegen.

2. Kommissioniersystem nach Anspruch 1, **dadurch gekennzeichnet, dass** die horizontal ausgerichtete Sensoranordnung (30) dazu ausgelegt ist, zu überwachen, ob ein von dem Artikel (18) eingenommenes Artikelvolumen eine vorgegebene horizontale Ebene (32) schneidet und die Steuerung dazu ausgelegt ist, eine Z-Position des Greifarms (16) zu registrieren, in welcher das Artikelvolumen die horizontale Ebene (32) verlassen hat, wobei die erkannte Z-Position des Greifarms (16) der erkannten Lage der Unterkante des Artikels (18) entspricht.

3. Kommissioniersystem nach einem der vorhergehenden Ansprüche,
**dadurch gekennzeichnet, dass**
die Steuerung (14) dazu ausgelegt ist, den Greifarm (16) derart zu steuern, dass der Artikel (18) in einer Abwurfhöhe losgelassen wird und die Abwurfhöhe abhängig von der erkannten Lage der Unterkante des Artikels (18) zu berechnen.

4. Kommissioniersystem nach einem der vorhergehenden Ansprüche,
**dadurch gekennzeichnet, dass**
die Sensoranordnung (30) dazu ausgelegt ist, einen Schwenkfreigabezeitpunkt zu detektieren, in dem die Unterkante des Artikels (18) während des Anhebevorgangs über den Behälterrand (20a) des Quellbehälters (20) hinaus angehoben wurde.

5. Kommissioniersystem nach Anspruch 4,
**dadurch gekennzeichnet, dass**
die Steuerung (14) dazu ausgelegt ist, einen Abbruchzeitpunkt des Anhebevorgangs abhängig von dem Schwenkfreigabezeitpunkt zu bestimmen.

6. Kommissioniersystem nach einem der vorhergehenden Ansprüche,
**dadurch gekennzeichnet, dass**
die Sensoranordnung (30) an einem Sockel (24) des Roboters (10) angeordnet ist.

7. Kommissioniersystem nach einem der vorhergehenden Ansprüche,
**dadurch gekennzeichnet, dass**
die Steuerung (14) dazu ausgelegt ist, die von der Sensoranordnung (30) erfassten Daten zur Verifikation des Artikels (18) zu nutzen.

8. Kommissioniersystem nach einem der vorhergehenden Ansprüche,
**dadurch gekennzeichnet, dass**
die Steuerung (14) dazu ausgelegt ist, die Lage der Unterkante und die von der Kamera erfassten Daten und/oder die in Stammdaten hinterlegten Abmessungen zu nutzen, um eine Anzahl von gegriffenen Artikeln zu erkennen.

9. Kommissioniersystem nach einem der vorhergehenden Ansprüche,
**dadurch gekennzeichnet, dass**
die Steuerung (14) dazu ausgelegt ist, die Lage der Unterkante und die von der Kamera erfassten Daten und/oder die in Stammdaten hinterlegten Abmessungen zu nutzen, um eine Orientierung des Artikels von gegriffenen Artikeln zu erkennen und im Ablagevorgang zu nutzen, um durch ein optimiertes Schlichtmuster eine Packdichte im Zielbehälter zu erhöhen.

10. Kommissioniersystem nach einem der vorhergehenden Ansprüche,
**dadurch gekennzeichnet, dass**
das Kommissioniersystem zur Entnahme von Artikeln aus mehreren Quellbehältertypen mit unterschiedlichen Quellbehälterhöhen ausgelegt ist, wobei die horizontal ausgerichtete Sensoranordnung (30) so angeordnet werden kann, dass sie einen Bereich oberhalb einer Behälterwand des Quellbehältertyps mit der höchsten Quellbehälterhöhe überwacht.

11. Kommissioniersystem nach einem der vorhergehenden Ansprüche,
**dadurch gekennzeichnet, dass**
die horizontal ausgerichtete Sensoranordnung (30) zur Anpassung an verschiedene Quellbehälterhöhen höhenverstellbar ist.

12. Kommissioniersystem nach einem der vorhergehenden Ansprüche,
**gekennzeichnet durch**
mehrere horizontal ausgerichtete Sensoranordnungen (30, 30') die zur Überwachung von Quellbehältertypen mit unterschiedlichen Quellbehälterhöhen auf verschiedenen Höhen angeordnet sind.

13. Kommissioniersystem nach einem der vorhergehenden Ansprüche,
**dadurch gekennzeichnet, dass**
die Steuerung (14) dazu ausgelegt ist, die von der Sensoranordnung (30) erfassten Daten zur Ermittlung einer Breite und/oder Form des Artikels (18) zu nutzen, insbesondere für nicht quaderförmige Artikel.

14. Kommissioniersystem nach einem der vorhergehenden Ansprüche,
**dadurch gekennzeichnet, dass**
das Kommissioniersystem ferner eine im Wesentlichen vertikal ausgerichtete Sensoranordnung (36) in einem Schwenkbereich des Greifarms umfasst, wobei die Steuerung (14) dazu ausgelegt ist, während eines Schwenkvorgangs eine Länge des Artikels (18) in Schwenkrichtung aus den Daten der vertikal ausgerichteten Sensoranordnung (36) zu detektieren.

15. Kommissioniersystem nach einem der vorhergehenden Ansprüche,
**dadurch gekennzeichnet, dass**
die Steuerung (14) dazu ausgelegt ist:

• aus dem Kameradaten der Kamera (12a) einen Lagewinkel des Artikels relativ zu dem Wänden des Quellbehälters (20) zu erhalten,

• aus den Signalen der Sensoranordnung (30) in Kombination mit dem Lagewinkel die Seitenlängen des Artikels (18) in Draufsicht zu berechnen.

16. Kommissioniersystem nach einem der vorhergehenden Ansprüche, **gekennzeichnet durch** eine weitere Sensoranordnung (38), insbesondere weitere Kamera, zur Aufnahme einer Unterseite des Artikels (18) während des Schwenkvorgangs.

17. Kommissioniersystem nach einem der vorhergehenden Ansprüche, **dadurch gekennzeichnet, dass** die Steuerung (14) dazu ausgelegt ist, durch Bewegen des Greifers oder eines vom Greifer gegriffenen Kalibrierungskörpers in die überwachte Ebene der Sensoranordnung (30) die Sensoranordnung (30) zu kalibrieren.

18. Kommissionierverfahren für ein Kommissioniersystem nach einem der vorhergehenden Ansprüche, umfassend die Schritte:

   - Erfassen wenigstens des Quellbehälters (20) in einer Draufsicht mit einer Kamera (12a),
   - Steuerung (14) des Greifarms (16) abhängig von den von der Kamera (12a) erfassten Bilddaten derart, dass der Greifarm (16) den Artikel (18) greift, in einem Anhebevorgang mit dem Greifarm (16) eines Roboters (10) aus einem Quellbehälter (20) mit einem Behälterrand (20a) entnimmt, über einen Zielbehälter (22) führt und in einem Ablagevorgang in den Zielbehälter (22) ablegt,

   wobei das Kommissioniersystem ferner die folgenden Schritte umfasst:

   - Erkennen einer Lage einer Unterkante des Artikels (18) während des Anhebevorgangs mittels einer im Wesentlichen horizontal ausgerichteten Sensoranordnung (30),
   - Berechnen einer Trajektorie zur Überführung des Artikels (18) in den Zielbehälter (22) abhängig von der erkannten Lage der Unterkante des Artikels (18) und
   - Steuern wenigstens des Ablagevorgangs abhängig von der erkannten Lage der Unterkante des Artikels (18).

**Claims**

1. Commissioning system comprising:

   - a robot (10) having a gripper arm (16) for removing an article (18) from a source container (20) having a container rim (20a) and depositing the article (18) into a destination container (22),
   - a camera (12a) for capturing at least the source container (20) in a plan view,
   - a controller (14) which is designed to control the gripper arm (16) as a function of the image data acquired by the camera (12a) in such a way that the gripper arm (16) grips the article (18), lifts it in a lifting operation, guides it over the target container (22) in a pivoting operation and deposits it in the target container (22) in a depositing operation,

   wherein

   - the commissioning system comprises a substantially horizontally oriented sensor arrangement (30) at least for detecting a position of a lower edge of the article (18) in the course of the lifting process,

   **characterized in that**

   - the control system (14) is adapted to calculate a trajectory for transferring the article (18) into the destination container (22) depending on the detected position of the lower edge of the article and to control the depositing process depending on the detected position of the lower edge of the article (18),

   wherein the controller (14) is designed to calculate a height of the article (18) from the detected position of the lower edge of the article (18) and to control at least the depositing operation as a function of the detected height of the article (18) and to gently deposit the article with a braking operation of the gripper arm initiated in a timely manner before the depositing position is reached and/or with a dropping from a low height.

2. Commissioning system according to claim 1, **characterized in that** the horizontally oriented sensor arrangement (30) is adapted to monitor whether an article volume occupied by the article (18) intersects a predetermined horizontal plane (32), and the controller is adapted to register a Z-position of the gripper arm (16) in which the article volume has left the horizontal plane (32), the detected Z-position of the gripper arm (16) corresponding to the detected position of the lower edge of the article (18).

3. Commissioning system according to one of the preceding claims, **characterized in that** the control system (14) is designed to control the gripper arm (16) in such a way that the article (18) is released at a discharge height and to calculate the discharge height depending on the detected position of the lower edge of the article (18).

4. Commissioning system according to any of the preceding claims, **characterized in that**
the sensor arrangement (30) is adapted to detect a pivot release time at which the lower edge of the article (18) has been lifted beyond the container edge (20a) of the source container (20) during the lifting process.

5. Commissioning system according to claim 4, **characterized in that**
the control system (14) is designed to determine an abort time of the lifting process depending on the swivel release time.

6. Commissioning system according to one of the preceding claims, **characterized in that**
the sensor arrangement (30) is arranged on a base (24) of the robot (10).

7. Commissioning system according to one of the preceding claims, **characterized in that**
the control system (14) is designed to use the data detected by the sensor arrangement (30) for verification of the article (18).

8. Commissioning system according to any one of the preceding claims, **characterized in that**
the controller (14) is adapted to use the position of the bottom edge and the data captured by the camera and/or the dimensions stored in master data to detect a number of gripped articles.

9. Commissioning system according to one of the preceding claims, **characterized in that**
the control system (14) is designed to use the position of the bottom edge and the data detected by the camera and/or the dimensions stored in master data to detect an orientation of the article of gripped articles and to use it in the depositing process to increase a packing density in the target container by means of an optimized sizing pattern.

10. Commissioning system according to any of the preceding claims, **characterized in that**
the commissioning system is designed for commissioning articles from a plurality of source container types having different source container heights, wherein the horizontally oriented sensor arrangement (30) can be arranged to monitor an area above a container wall of the source container type having the highest source container height.

11. Commissioning system according to any one of the preceding claims, **characterized in that**
the horizontally oriented sensor arrangement (30) is adjustable in height for adaptation to different source container heights.

12. Commissioning system according to any of the preceding claims, **characterized by**
a plurality of horizontally aligned sensor arrangements (30, 30') which are arranged at different heights for monitoring source container types with different source container heights.

13. Commissioning system according to any of the preceding claims, **characterized in that**
the control system (14) is designed to use the data detected by the sensor arrangement (30) to determine a width and/or shape of the article (18), in particular for non-square-shaped articles.

14. Commissioning system according to one of the preceding claims, **characterized in that**
the commissioning system further comprises a substantially vertically oriented sensor arrangement (36) in a pivoting area of the gripper arm, wherein the controller (14) is adapted to detect a length of the article (18) in the pivoting direction from the data of the vertically oriented sensor arrangement (36) during a pivoting operation.

15. Commissioning system according to any one of the preceding claims, **characterized in that**
the control system (14) is adapted

    - to obtain from the camera data of the camera (12a) a position angle of the article relative to the walls of the source container (20),
    - to calculate from the signals of the sensor arrangement (30) in combination with the position angle the side lengths of the article (18) in plan view.

16. Commissioning system according to any of the preceding claims, **characterized by** a further sensor arrangement (38), in particular a further camera, for recording an underside of the article (18) during the pivoting process.

17. Commissioning system according to one of the preceding claims, **characterized in that** the controller (14) is designed to calibrate the sensor arrangement (30) by moving the gripper or a calibration body gripped by the gripper into the monitored plane of the sensor arrangement (30).

18. Commissioning method for a commissioning system according to any one of the preceding claims, comprising the steps of:

    - capturing at least the source container (20) in a top view with a camera (12a),
    - controlling (14) the gripper arm (16) depending on the image data acquired by the camera (12a) such that the gripper arm (16) grips the article (18), removes it from a source container (20) having a container rim (20a) in a lifting operation with the gripper arm (16) of a robot (10), guides it over a target container (22) and deposits it in the target container (22) in a depositing operation,

wherein the commissioning system further comprises the steps of:

- detecting a position of a bottom edge of the article (18) during the lifting process by means of a substantially horizontally oriented sensor arrangement (30),
- calculating a trajectory for transferring the article (18) into the target container (22) depending on the detected position of the lower edge of the article (18), and
- controlling at least the depositing process depending on the detected position of the lower edge of the article (18).

## Revendications

1. Système de préparation de commandes comprenant :

    - un robot (10) avec un bras de saisie (16) pour prélever un article (18) hors d'un conteneur source (20) avec un bord de conteneur (20a) et pour déposer l'article (18) dans un conteneur cible (22),
    - une caméra (12a) pour détecter au moins le conteneur source (20) dans une vue aérienne,
    - une commande (14) qui est conçue pour commander le bras de saisie (16) en fonction des données d'image détectées par la caméra (12a) de façon à ce que le bras de saisie (16) saisisse l'article (18), le soulève dans un processus de levage, le dirige au-dessus du conteneur cible (22) dans un processus de bascule et le dépose dans le conteneur cible (22) dans un processus de dépose,

    dans lequel

    - le système de préparation de commandes comprend un dispositif de capteurs (30) aligné essentiellement horizontalement au moins pour détecter une position d'un bord inférieur de l'article (18) pendant le processus de levage,

    **caractérisé en ce que**

    - la commande (14) est conçue pour calculer une trajectoire de transfert de l'article (18) dans le conteneur cible (22) en fonction de la position détectée du bord inférieur de l'article (18) et pour commander le processus de dépose en fonction de la position détectée du bord inférieur de l'article (18),

    dans lequel
    la commande (14) est conçue pour calculer, à partir de la position détectée du bord inférieur de l'article (18), une hauteur de l'article (18) et commander au moins le processus de dépose en fonction de la hauteur détectée de l'article (18) et déposer doucement l'article avec un processus de freinage du bras de saisie introduit à temps avant d'atteindre la position de dépose et/ou un lâchage à faible hauteur.

2. Système de préparation de commandes selon la revendication 1,
   **caractérisé en ce que** l'agencement de capteur (30) aligné horizontalement est conçu pour surveiller si un volume d'article occupé par l'article (18) coupe un plan horizontal (32) prédéfini et la commande est conçue pour enregistrer une position Z du bras de saisie (16) dans laquelle le volume d'article a quitté le plan horizontal (32), dans lequel la position Z détectée du bras de saisie (16) correspond à la position détectée du bord inférieur de l'article (18).

3. Système de préparation de commandes selon l'une des revendications précédentes,
   **caractérisé en ce que**
   la commande (14) est conçue pour commander le bras de saisie (16) de façon à ce que l'article (18) soit libéré à une hauteur de largage et la hauteur de largage doit être calculée en fonction de la position détectée du bord inférieur de l'article (18).

4. Système de préparation de commandes selon l'une des revendications précédentes,
   **caractérisé en ce que**
   l'agencement de capteurs (30) est conçu pour détecter un moment de déclenchement de bascule dans lequel le bord inférieur de l'article (18) est levé au-delà du bord de conteneur (20a) du conteneur source (20) pendant le processus de levage.

5. Système de préparation de commandes selon la revendication 4,
   **caractérisé en ce que**
   la commande (14) est conçue pour déterminer un moment d'interruption du processus de levage en fonction du moment de déclenchement de bascule.

6. Système de préparation de commandes selon l'une des revendications précédentes,
   **caractérisé en ce que**
   l'agencement de capteurs (30) est disposé sur un socle (24) du robot (10).

7. Système de préparation de commandes selon l'une des revendications précédentes, **caractérisé en ce que** la commande (14) est conçue pour exploiter les données détectées par l'agencement de capteurs (30) pour la vérification de l'article (18).

8. Système de préparation de commandes selon l'une des revendications précédentes, **caractérisé en ce que** la commande (14) est conçue pour exploiter la position du bord inférieur et les données détectées par la caméra et/ou les dimensions enregistrées dans les données de base, pour détecter un nombre d'articles saisis.

9. Système de préparation de commandes selon l'une des revendications précédentes, **caractérisé en ce que** la commande (14) est conçue pour exploiter la position du bord inférieur et les données détectées par la caméra et/ou les dimensions enregistrées dans les données de base, pour détecter une orientation de l'article par rapport à des articles saisis et l'exploiter dans le processus de dépose pour augmenter une épaisseur d'empilement dans le conteneur cible par un modèle simple optimisé.

10. Système de préparation de commandes selon l'une des revendications précédentes, **caractérisé en ce que** le système de préparation de commandes est conçu pour prélever des articles hors de plusieurs types de conteneurs sources avec différentes hauteurs de conteneur source, dans lequel l'agencement de capteurs (30) aligné horizontalement peut être ainsi agencé qu'il surveille une zone au-dessus d'une paroi de conteneur du type de conteneur source avec la hauteur de conteneur source la plus élevée.

11. Système de préparation de commandes selon l'une des revendications précédentes, **caractérisé en ce que** l'agencement aligné horizontalement (30) est réglable en hauteur pour s'adapter à différentes hauteurs de conteneurs types.

12. Système de préparation de commandes selon l'une des revendications précédentes, **caractérisé par** plusieurs agencements de capteurs alignés horizontalement (30, 30') qui sont disposés à différentes hauteurs pour surveiller des types de conteneurs sources avec différentes hauteurs de conteneurs sources.

13. Système de préparation de commandes selon l'une des revendications précédentes, **caractérisé en ce que** la commande (14) est conçue pour exploiter les données saisies par l'agencement de capteurs (30) pour déterminer une largeur et/ou une forme de l'article (18), en particulier pour les articles qui ne sont pas parallélépipédiques.

14. Système de préparation de commandes selon l'une des revendications précédentes, **caractérisé en ce que** le système de préparation de commandes comprend en outre un agencement de capteurs (36) aligné essentiellement verticalement dans une zone de bascule du bras de saisie, dans lequel la commande (14) est conçue pour détecter, pendant un processus de bascule, une longueur de l'article (18) dans le sens de bascule à partir des données de l'agencement de capteurs (36) aligné verticalement.

15. Système de préparation de commandes selon l'une des revendications précédentes, **caractérisé en ce que** la commande (14) est conçue pour :

  - obtenir un angle de position de l'article par rapport aux parois du conteneur source (20) à partir des données de la caméra (12a),
  - calculer les longueurs des côtés de l'article (18) en vue aérienne à partir des signaux de l'agencement de capteurs (30) en combinaison avec l'angle de position.

16. Système de préparation de commandes selon l'une des revendications précédentes, **caractérisé par** un agencement de capteurs supplémentaire (38), en particulier une caméra supplémentaire, pour la prise de vue d'un bord inférieur de l'article (18) pendant le processus de bascule.

17. Système de préparation de commandes selon l'une des revendications précédentes, **caractérisé en ce que** la commande (14) est conçue pour calibrer l'agencement de capteurs (30) par un mouvement du grappin ou d'un corps de calibrage saisi par le grappin dans le plan surveillé de l'agencement de capteurs (30).

18. Procédé de préparation de commandes pour un système de préparation de commandes selon l'une des revendications précédentes, comprenant les étapes

  - de détection d'au moins le conteneur source (20) dans une vue aérienne avec une caméra (12a),
  - de commande (14) du bras de saisie (16) en fonction des données d'image détectées par la caméra (12a) de façon à ce que le bras de saisie (16) saisisse l'article (18), le prélève d'un conteneur source (20) avec un bord de conteneur (20a) au cours d'un processus de levage avec le bras de saisie (16) d'un robot (10), le dirige au-dessus d'un conteneur cible (22) et le dépose dans le conteneur cible (22) au cours d'un processus de dépose,

dans lequel
le système de préparation de commandes comprend en outre les étapes suivantes :

- détection d'une position d'un bord inférieur de l'article (18) pendant le processus de levage au moyen d'un agencement de capteurs (30) aligné essentiellement horizontalement,
- calcul d'une trajectoire de transfert de l'article (18) dans le conteneur cible (22) en fonction de la position détectée du bord inférieur de l'article (18) et
- commande d'au moins le processus de dépose en fonction de la position détectée du bord inférieur de l'article (18).

Fig. 1

Fig. 2

| S1 |
|---|
| Start Anhebevorgang |

↓

| S2 |
|---|
| Detektion der Unterseite des Artikels |

↓

| S3 |
|---|
| Berechnung der Trajektorie |

↓

| S4 |
|---|
| Schwenkvorgang |

↓

| S5 |
|---|
| Absenkvorgang |

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9174343 B2
- WO 2018132855 A2
- DE 102019003334 A1
- WO 2019169420 A1
- DE 102018202389 A1
- DE 112017007398 T5
- DE 102016107268 A1
- DE 102014005434 B4
- US 20170136632 A1